# EUROPÄISCHE PATENTSCHRIFT

(11) **EP 1 336 768 B1**
(45) Veröffentlichungstag und Bekanntmachung des Hinweises auf die Patenterteilung: **12.10.2005**
(21) Anmeldenummer: 02003754.5
(22) Anmeldetag: 19.02.2002
(51) Int. Cl.: F16D 48/06

(54) **Vorrichtung und Verfahren zum Steuern eines automatisierten Antriebsstranges eines Kraftfahrzeuges**
Device and method for controlling an automated drive train of a motor vehicle
Dispositif et procédé pour commander un arbre d'entraînement automatisé d'une automobile

(43) Veröffentlichungstag der Anmeldung: 20.08.2003
(73) Patentinhaber: Getrag Ford Transmissions GmbH, 50725 Köln (DE)
(72) Erfinder: Quast, Jörg-Rainer, 50858 Köln (DE); Hüpkes, Stefan, 41748 Viersen (DE); Schäbe, Hendrik, Dr., 53859 Niederkassel (DE)
(74) Vertreter: Steil, Christian

(56) Entgegenhaltungen:
- EP-A- 0 808 253
- DE-A- 3 720 385

## Beschreibung

Die vorliegende Erfindung betrifft eine Steuervorrichtung für einen automatisierten Antriebsstrang eines Kraftfahrzeuges, wobei der Antriebsstrang einen Motor, insbesondere einen Verbrennungsmotor, ein Getriebe, insbesondere ein Stirnradgetriebe, und eine zwischen Motor und Getriebe angeordnete Trennkupplung aufweist, wobei die Steuervorrichtung eine Hauptsteuereinheit und eine mit der Hauptsteuereinheit verbundene Kupplungssteuereinheit aufweist, die einen Aktuator für die Trennkupplung ansteuert, wobei die Hauptsteuereinheit ein Sicherheitssignal an die Kupplungssteuereinheit übersendet, gemäß dem die Kupplungssteuereinheit die Trennkupplung ansteuert, wenn ein definierter Fehlerfall auftritt.

Ferner betrifft die vorliegende Erfindung ein entsprechendes Verfahren zum Steuern eines automatisierten Antriebsstranges.

Eine derartige Steuervorrichtung bzw. ein derartiges Steuerverfahren sind bekannt. Bei dieser Steuervorrichtung entspricht das Sicherheitssignal der Drehzahl des Motors. Falls der Motor steht, wird die Trennkupplung geschlossen, andernfalls geöffnet. Der Nachteil dieser einfachen Einrichtungen besteht darin, daß im Fehlerfall nicht in allen Fahrsituationen optimal reagiert werden kann.

Eine ähnliche Steuervorrichtung ist bekannt aus der DE 198 07 764 A1.

Die DE 198 07 764 A1 offenbart eine Steuereinheit für eine automatisierte Anfahrkupplung eines Kraftfahrzeug-Handschaltgetriebes. Die Kupplungssteuereinheit steht über einen CAN-Bus mit der Motorsteuerung in Verbindung. Die Steuereinheit sorgt in einem normalen Betriebsmodus dafür, daß das Fahrzeug bei laufendem Motor, eingelegtem Gang und nicht betätigtem Gaspedal "kriecht". Falls ein Fehler ö.ä. erfaßt wird, wird in einen Notfallmodus geschaltet, in dem die Steuereinheit das "Ankriechen" verhindert.

Aus der DE 44 41 896 A1 ist ein Steuerungskonzept für den Antriebsstrang eines Kraftfahrzeuges bekannt. Eine Motorsteuerung und eine Getriebesteuerung für einen Wandlerautomaten oder ein stufenloses Getriebe sind über einen Kommunikationsbus miteinander verbunden. Die Motorsteuerung beinhaltet Funktionseinheiten zur Getriebesteuerung, die von Daten des Motors und des Chassis abhängig sind, wie z.B. eine Schaltpunktwahlsteuerung, und die der Getriebesteuerung Eingangssignale bereitstellen. Eine Notfalleinrichtung erkennt, wenn die Kommunikation über den Bus gestört ist. Dann schaltet die Getriebesteuerung auf andere Eingangssignale um, beispielsweise auf Handschaltsignale. Mit anderen Worten wird bei einer Busstörung ein Fahrer darauf hingewiesen, daß er von Hand schalten muß.

Die Druckschrift DE 199 47 025 A1 betrifft eine einzelne Ansteuervorrichtung für einen Antriebsstrang. Der Antriebsstrang beinhaltet einen Verbrennungsmotor, eine Anfahrkupplung und automatisiertes Handschaltgetriebe. In der Ansteuervorrichtung werden von einer ersten Software-Prozedur Ansteuervorgaben für den Motor, die Kupplung und das Getriebe erzeugt. Eine zweite Software-Prozedur überprüft die erzeugten Ansteuervorgaben auf Zulässigkeit. Die zweite Prozedur kann als Redundanzprozedur ausgeführt sein. Alternativ überprüft die zweite Prozedur die Ansteuervorgaben der ersten Prozedur anhand von anderen Maßstäben. Falls die zweite Prozedur feststellt, daß eine von der ersten Prozedur erzeugte Vorgabe nicht zulässig ist, werden Sicherheitsmaßnahmen ergriffen.

Eine Steuervorrichtung bzw ein Steuerverfahren mit den Merkmalen des Oberbegriffs der Ansprüche 1 und 16 ist bekannt aus EP-A-808 253.

Vor dem obigen Hintergrund besteht die Aufgabe der vorliegenden Erfindung darin, eine Steuervorrichtung bzw. ein Steuerverfahren für einen automatisierten Antriebsstrang anzugeben, bei denen die Notfalleigenschaften verbessert sind.

Diese Aufgabe wird bei der eingangs genannten Steuervorrichtung bzw. dem eingangs genannten Steuerverfahren dadurch gelöst, daß die Hauptsteuereinheit dazu ausgelegt ist, das Sicherheitssignal auf der Grundlage einer Mehrzahl von Fahrzeugzustandsvariablen zu erzeugen.

Auf diese Weise kann die Kupplungssteuereinheit im Notfallbetrieb nach Feststellung des definierten Fehlerfalls (im folgenden kurz "Fehler"), beispielsweise bei Ausfall des Prozessors der Kupplungssteuereinheit (oder bei einer Störung der Kommunikationsverbindung zwischen der Hauptsteuereinheit und der Kupplungssteuereinheit), die Trennkupplung besser angepaßt an den bei der Störung vorliegenden Zustand des Fahrzeugs ansteuern.

Die Hauptsteuereinheit erzeugt folglich regelmäßig, vorzugsweise kontinuierlich das Sicherheitssignal auf der Grundlage der Mehrzahl von Fahrzeugzustandsvariablen, so daß das Sicherheitssignal immer optimal an den Zustand des Fahrzeugs angepaßt ist. Dieses Sicherheitssignal wird regelmäßig, vorzugsweise kontinuierlich (bzw. quasi-kontinuierlich) an die Kupplungssteuereinheit übertragen.

Die Kupplungssteuereinheit weist folglich zu jedem Zeitpunkt eine redundante Information über den Fahrzeugzustand auf, die auf einer Mehrzahl von Fahrzeugzustandsvariablen beruht und folglich differenzierter ist als bekannte Systeme, bei denen das Sicherheitssignal lediglich ein einzelnes Sensorsignal, d.h. das von der Hauptsteuereinheit weitergeleitete Motordrehzahlsignal ist.

Ferner ist es möglich, die Erzeugung des Sicherheitssignals aus der Vielzahl von in der Hauptsteuereinheit vorliegenden Fahrzeugzustandsvariablen auf die Bedürfnisse der Kupplungssteuereinheit für den Notfallbetrieb zuzuschneiden.

Die Aufgabe wird auf diese Weise vollkommen gelöst.

Bei dem auftretenden Fehler kann es sich beispielsweise um einen Fehler in einem Getriebe-/Kupplungssteuer-Hauptprozessor handeln oder um eine Störung der Kommunikationsverbindung zwischen der Hauptsteuereinheit und der Kupplungssteuereinheit. Auch ist es denkbar, daß die Kupplungssteuereinheit die Trennkupplung auf der Grundlage des zuletzt empfangenen Sicherheitssignals ansteuert, falls beispielsweise die Hauptsteuereinheit insgesamt ausgefallen ist.

Von besonderem Vorzug ist es dabei, wenn das Sicherheitssignal ein zweiwertiges Signal ist.

Folglich wird trotz der Tatsache, daß eine Mehrzahl von Fahrzeugzustandsvariablen in die Erzeugung des Sicherheitssignals einbezogen wird, nur ein zweiwertiges Signal erzeugt. Ein derartiges Signal ist auf seiten der Kupplungssteuereinheit relativ leicht auszuwerten.

Gemäß einer alternativen Ausführungsform nimmt das Sicherheitssignal einen von N unterschiedlichen Werten an, wobei N > 2.

Bei dieser Ausführungsform ist das Sicherheitssignal in Abhängigkeit von der Mehrzahl von Fahrzeugzustandsvariablen "genauer", gibt also den jeweils vorliegenden Zustand des Fahrzeugs exakter an.

Insgesamt ist es von Vorzug, wenn die Kupplungssteuereinheit die Trennkupplung in Abhängigkeit von dem Sicherheitssignal entweder öffnet oder schließt.

Bei einem zweiwertigen Sicherheitssignal wird der eine Wert folglich zum Öffnen, der andere Wert zum Schließen der Trennkupplung verwendet. Bei einem mehrwertigen Signal wird folglich innerhalb der Kupplungssteuereinheit nochmals eine Entscheidung getroffen, ob die Kupplung geöffnet oder geschlossen werden soll. Bei dieser Ausführungsform gibt es keine Zwischenzustände der Trennkupplung.

Alternativ hierzu ist es jedoch auch möglich, daß die Kupplungssteuereinheit die Trennkupplung in Abhängigkeit von dem Sicherheitssignal öffnet, schließt oder in einen Schleifzustand bringt.

Es versteht sich, daß diese Ausführungsform insbesondere bei einem mehrwertigen (N > 2) Sicherheitssignal Anwendung finden kann. So ist es beispielsweise bei Ausfall des Kupplungs-/Getriebehauptprozessors möglich, die Trennkupplung (nach der Art eines Bypasses) mittels der Hauptsteuereinheit anzusteuern. Bei dieser Ausführungsform ist folglich im Fehlerfall sogar ein Anfahren aus dem Stillstand möglich, beispielsweise um in einer Notsituation von einem Bahngleis wegzufahren.

Von besonderem Vorzug ist es dabei, wenn die Kupplungssteuereinheit ein Kupplungsansteuersignal proportional zu dem Wert des Sicherheitssignals erzeugt.

Auf diese Weise muß die Kupplungssteuereinheit keine besondere Logik beinhalten, um die Trennkupplung anzusteuern. Die "Intelligenz" der Ansteuerung übernimmt in einem solchen Fall die Hauptsteuereinheit.

Gemäß einer bevorzugten Ausführungsform beinhaltet die Mehrzahl von Fahrzeugzustandsvariablen die Motordrehzahl.

Hierdurch ist es möglich zu erkennen, ob der Motor läuft oder nicht.

Gemäß einer weiteren bevorzugten Ausführungsform beinhaltet die Mehrzahl von Fahrzeugzustandsvariablen die Fahrzeuggschwindigkeit.

Hierdurch ist es möglich festzustellen, ob das Fahrzeug bei dem Auftreten bzw. während des Fehlerzustandes rollt oder nicht.

Gemäß einer weiteren bevorzugten Ausführungsform beinhaltet die Mehrzahl von Fahrzeugzustandsvariablen die Gaspedalstellung.

Hieraus läßt sich ableiten, ob der Fahrer Motorleistung abrufen möchte oder nicht.

Schließlich beinhaltet die Mehrzahl von Fahrzeugzustandsvariablen gemäß einer weiteren bevorzugten Ausführungsform die Bremspedalstellung.

Hieraus läßt sich ableiten, ob der Fahrer des Kraftfahrzeuges das Fahrzeug abbremsen möchte oder nicht.

Insgesamt ist es ferner bevorzugt, wenn die Verbindung zwischen der Hauptsteuereinheit und der Kupplungssteuereinheit durch einen Bus, insbesondere einen CAN-Bus, gebildet ist.

Derartige Bussysteme sind besonders geeignet für den Einsatz in Kraftfahrzeugen.

Dabei ist es möglich, das Sicherheitssignal über den Bus zu übertragen.

Bei dieser Ausführungsform kann die Verbindung zwischen der Hauptsteuereinheit und der Kupplungssteuereinheit auch ausschließlich durch den Bus realisiert werden.

Bei einer bevorzugten Ausführungsform wird das Sicherheitssignal von der Hauptsteuereinheit zu der Kupplungssteuereinheit über eine separate Leitung übertragen.

Bei dieser Ausführungsform wird für eine gewisse Redundanz gesorgt, indem das Sicherheitssignal an die Kupplungssteuereinheit übertragen werden kann, selbst dann, wenn die Busverbindung gestört ist.

Insgesamt ist es ferner von Vorzug, wenn das Sicherheitssignal ein Frequenzsignal ist, dessen Frequenz von der Mehrzahl von Fahrzeugzustandsvariablen abhängt.

Ein derartiges Signal läßt sich auf Seiten der Hauptsteuereinheit vergleichsweise leicht erzeugen und auf der Seite der Kupplungssteuereinheit relativ leicht auswerten.

Gemäß einer weiteren bevorzugten Ausführungsform weist die Kupplungssteuereinheit eine Prozessoreinrichtung und eine Überwachungseinrichtung auf, wobei die Überwachungseinrichtung das Sicherheitssignal unmittelbar empfängt und dazu ausgelegt ist, den Aktuator unmittelbar anzusteuern.

Bei dieser Ausführungsform ist die Kupplungssteuereinheit so aufgebaut, daß ein Notfallbetrieb selbst dann möglich ist, wenn der Hauptprozessor der Kupplungssteuereinheit ausgefallen ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockschaltbild einer Ausführungsform der erfindungsgemäßen Steuervorrichtung;
- Fig. 2: eine Tabelle von möglichen Kombinationen von Fahrzeugzustandsvariablen und daraus abgeleiteten Kupplungsansteuervariablen;
- Fig. 3: eine schematische Darstellung eines zweiwertigen Sicherheitssignals;
- Fig. 4: eine schematische Darstellung eines mehrwertigen Sicherheitssignals; und
- Fig. 5: eine alternative Ausführungsform eines Sicherheitssignals über der Zeit.

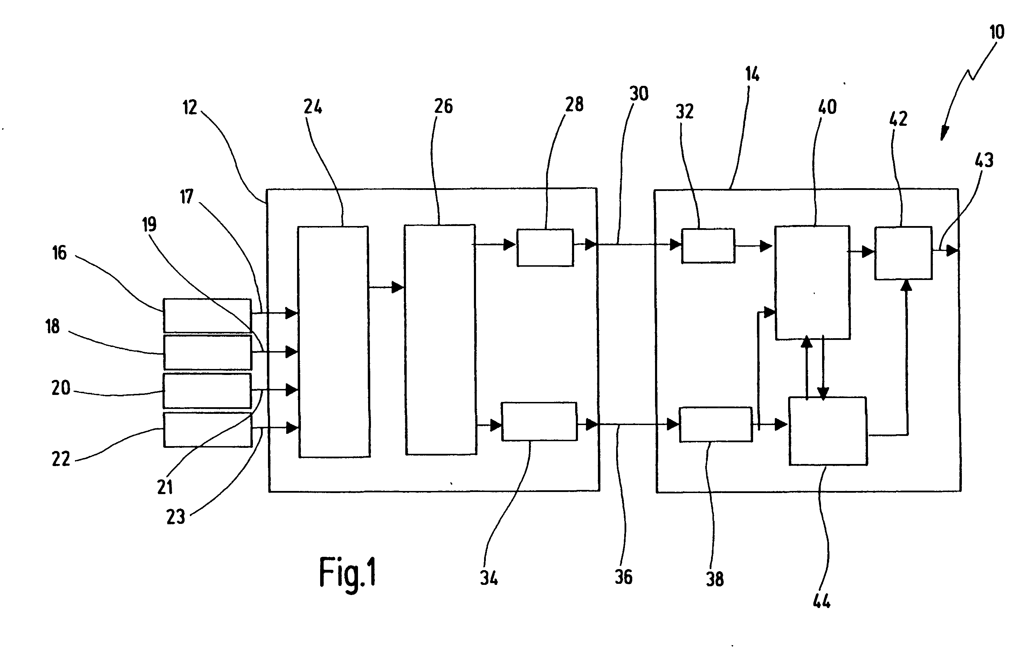

In Fig. 1 ist eine erfindungsgemäße Steuervorrichtung generell mit 10 bezeichnet.

Die Steuervorrichtung 10 weist eine Motorsteuereinheit 12 und eine Getriebesteuereinheit 14 auf.

Die Steuervorrichtung 10 wird dazu verwendet, einen automatisierten Antriebsstrang eines Kraftfahrzeuges anzusteuern, also die zur Automatisierung verwendeten Aktuatoren koordiniert zueinander zu betätigen. Die Motorsteuereinheit 12 und die Getriebesteuereinheit 14 sind in dem Kraftfahrzeug in der Regel örtlich voneinander getrennt.

Die Motorsteuereinheit 12 ist für den Antriebsstrang insgesamt eine Hauptsteuereinheit, und die Getriebesteuereinheit 14 ist sowohl zur Ansteuerung von Aktuatoren des Getriebes (zum Ein- und Auslegen von Gängen) als auch zum Ansteuern einer Trennkupplung geeignet.

Obgleich sich die vorliegende Ausführungsform auf einen "klassischen" Antriebsstrang mit einer sequentiellen Folge von Motor, Trennkupplung und Getriebe bezieht, versteht sich, daß auch andere Arten von Antriebssträngen von der erfindungsgemäßen Steuervorrichtung 10 angesteuert werden können. Dazu zählen insbesondere Doppelkupplungsgetriebe.

An die Motorsteuereinheit 12 ist ein Motordrehzahlsensor 16 angeschlossen, der die Motorsteuereinheit 12 mit der aktuellen Motordrehzahl 17 versorgt. Entsprechend ist ein Fahrzeuggeschwindigkeitssensor 18 zum Übermitteln der aktuellen Fahrzeuggeschwindigkeit 19 angeschlossen, ein Gaspedalstellungssensor 20 zum Übermitteln der aktuellen Gaspedalstellung 21 (oder im einfachsten Fall eines zweiwertigen Signals betreffend die Gaspedalbetätigung) und ein Bremspedalstellungssensor 22 zum Übermitteln einer Bremspedalstellung 23 (oder im einfacheren Fall eines zweiwertigen Bremsbetätigungssignals).

Die Sensorsignale 17, 19, 21 und 23 werden von einer Schnittstelleneinrichtung 24 der Motorsteuereinheit 12 verarbeitet und an eine Prozessoreinrichtung 26 (einen Hauptprozessor der Motorsteuereinheit 12) übermittelt. Die Prozessoreinrichtung 26 ist über eine CAN-Schnittstelle 28 mit einem CAN-Bus 30 verbunden. Auf der Seite der Getriebesteuereinrichtung 14 ist ebenfalls eine CAN-Schnittstelle 32 vorgesehen, die ebenfalls an den CAN-Bus 30 angeschlossen ist.

Die Motorsteuereinheit 12 weist ferner eine Sicherheitssignal-Schnittstelle 34 auf, die mit einer Verbindungsleitung 36 verbunden ist. Gleichfalls weist die Getriebesteuereinheit 14 eine Sicherheitssignal-Schnittstelle 38 auf, die ebenfalls mit der Verbindungsleitung 36 verbunden ist.

In der Getriebesteuereinheit 14 ist ebenfalls eine Prozessoreinrichtung 40 vorgesehen (ein Hauptprozessor der Getriebesteuereinheit 14). Die Prozessoreinrichtung 40 ist verbunden mit der CAN-Schnittstelle 32 und der Sicherheitssignal-Schnittstelle 38.

Ferner weist die Getriebesteuereinheit 14 einen Kupplungsventiltreiber 42 zum Erzeugen eines Kupplungsansteuersignals 43 für einen Aktuator zur Betätigung der Trennkupplung sowie eine Überwachungseinrichtung 44 auf.

Der Kupplungsventiltreiber 42 steht mit der Prozessoreinrichtung 40 und mit der Überwachungseinrichtung 44 in Verbindung.

Die Überwachungseinrichtung 44 ist mit der Sicherheitssignal-Schnittstelle 38 verbunden und steht in bidirektionaler Kommunikationsverbindung mit der Prozessoreinrichtung 40.

Die Motorsteuereinheit 12 dient generell dazu, den Motor (Verbrennungsmotor) des Kraftfahrzeuges anzusteuern, insbesondere Zündzeitpunkte festzulegen, Einspritzmengen, etc. Aus Übersichtlichkeitsgründen sind diese Funktionen der Motorsteuereinheit 12 in Fig. 1 nicht dargestellt.

Wie oben erwähnt, ist die Getriebesteuereinheit 14 dazu ausgelegt, über geeignete Treiber Aktuatoren des Getriebes des Kraftfahrzeuges anzusteuern, was aus Übersichtlichkeitsgründen in Fig. 1 ebenfalls nicht dargestellt ist.

Ferner dient die Motorsteuereinheit 12 dazu, die Getriebesteuereinheit 14 beispielsweise mit Fahrzeugzustandsinformationen etc. zu versorgen, in Abhängigkeit von den dargestellten Fahrzeugzustandssensoren 16, 18, 20, 22, sowie möglicher weiterer derartiger Sensoren und abgeleiteter Größen. Schließlich muß die Motorsteuereinheit 12 in Reaktion auf eine Anforderung der Getriebesteuereinheit 14 das Motormoment während dem Gangwechselvorgang, zum Teil fahrerwunschunabhängig, steuern.

Der Betrieb der Trennkupplung ist für die Fahrsicherheit des derart ausgestatteten Fahrzeugs von signifikanter Bedeutung. Die Trennkupplung dient in an sich bekannter Weise dazu, die Antriebsräder mit dem Motor zu verbinden oder von diesem zu entkoppeln. Als Beispiel für die Signifikanz der Kupplungsfunktion sei genannt, daß bei stehendem Fahrzeug und laufendem Motor möglicherweise nur die geöffnete Kupplung das Fahrzeug vor dem unerwünschten Losfahren bewahrt. Aus diesem Grund ist es von hoher Bedeutung, daß bei dem Auftreten einer Störung eine die Sicherheit erhöhende Betätigung der Trennkupplung gewährleistet wird.

Im Stand der Technik ist es bekannt, als Sicherheitssignal über die Leitung 36 lediglich die Motordrehzahl zu übertragen. Falls die Motordrehzahl kleiner ist als ein vorbestimmter Schwellenwert (unterhalb der Leerlaufdrehzahl), was bedeutet, daß der Motor ausgeschaltet ist, wird die Trennkupplung geschlossen. Hierdurch wird ein unbeabsichtigtes Wegrollen im Falle des ausgeschalteten Motors vermieden. Falls die Motordrehzahl größer ist als der Schwellenwert, wird die Kupplung geöffnet. Hierdurch wird verhindert, daß das Fahrzeug ungewollt anfährt. Während der Fahrt ist das Auftreten eines Fehlers jedoch sicherheitskritisch. Denn in einem solchen Fall ist die Motordrehzahl in der Regel größer als der Schwellenwert. Falls dann die Kupplung geöffnet wird, kann es beispielsweise zu einem unerwarteten Verlust von Antriebsleistung während eines Überholvorganges kommen.

Gemäß der vorliegenden Erfindung wird das Sicherheitssignal hingegen aus einer Mehrzahl von Fahrzeugzustandsvariablen erzeugt.

Hierdurch kann ein sicherer Zustand des Kraftfahrzeuges ("safe state") in allen Betriebssituationen realisiert werden, wie es nachfolgend anhand einer beispielhaften Ausführungsform beschrieben werden wird.

Es versteht sich, daß die Prozessoreinrichtung 40 während des normalen Betriebs das Sicherheitssignal auf der Leitung 36 auf Plausibilität hin überwacht. Hierdurch ist sichergestellt, daß die Redundanzfunktion, die durch das Sicherheitssignal bereitgestellt wird, im Ernstfall tatsächlich auch zur Verfügung steht.

Die Überwachungseinrichtung 44 überwacht den Betrieb der Prozessoreinrichtung 40. Falls die Prozessoreinrichtung 40 aus irgendwelchen Gründen in einen fehlerhaften Zustand gerät (sei es durch einen eigenen Fehler, eine Störung auf dem CAN-Bus o.ä.), "umgeht" die Überwachungseinrichtung 44 die Prozessoreinrichtung 40 und nutzt das über die Verbindungsleitung 36 übertragene Sicherheitssignal dazu aus, den Kupplungsventiltreiber 42 unmittelbar anzutreiben.

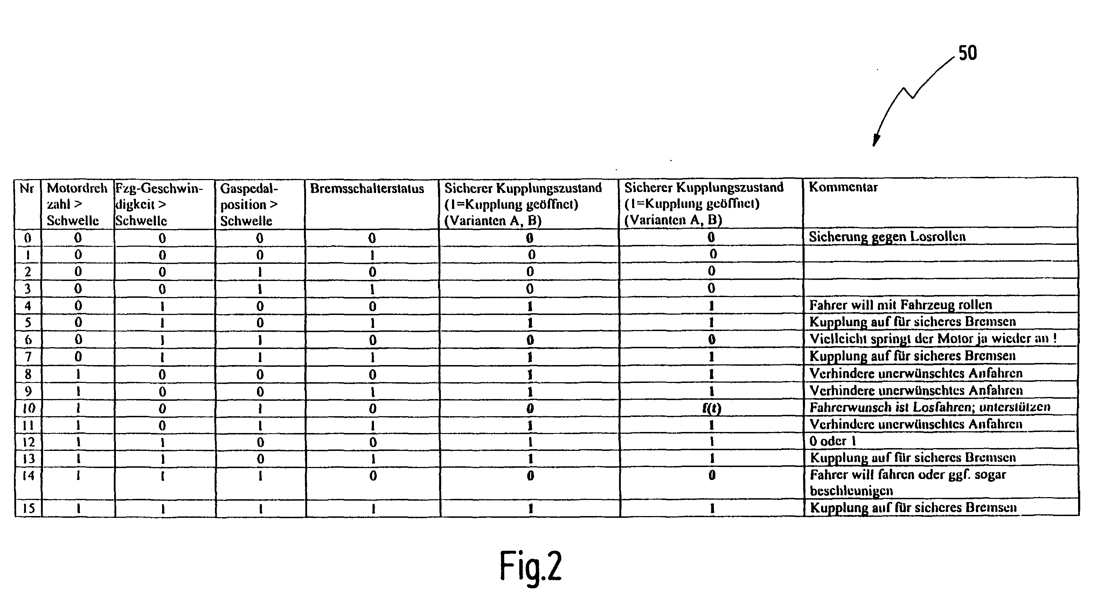

Fig. 2 zeigt eine Tabelle 50, in der 16 verschiedene Kombinationen von Zuständen der vier Sensoren 16, 18, 20 und 22 dargestellt sind.

Ferner ist in einer Spalte für jeden der 16 Zustände 0 - 15 ein von der Motorsteuereinheit 12 erzeugtes Sicherheitssignal gemäß einer ersten Ausführungsform gezeigt. Bei dieser Ausführungsform handelt es sich um ein zweiwertiges Signal, das entweder 0 (Kupplung geschlossen) oder 1 (Kupplung geöffnet) sein kann.

Diese Ausführungsform wird im folgenden als erstes erläutert.

Für den Fall (Zustand Nr. 0), daß die Motordrehzahl kleiner ist als eine Schwelle (also der Motor steht) und die Fahrzeuggeschwindigkeit kleiner ist als ein Schwellenwert (das Fahrzeug steht im wesentlichen) und sofern ferner das Gaspedal nicht niedergedrückt ist und die Bremse nicht betätigt ist, wird die Kupplung geschlossen (Sicherheitssignal = 0), so daß eine Wegfahrsperre bzw. eine Sicherung gegen Losrollen realisiert wird.

Wie sich aus den Zuständen Nr. 1, 2 und 3 ergibt, wird diese Wegfahrsperre unabhängig von der Gaspedalstellung 21 und der Bremspedalsstellung 22 erfüllt.

In dem Zustand Nr. 4 steht zwar der Motor, das Fahrzeug bewegt sich jedoch und die Bremse ist nicht betätigt. Dies bedeutet, daß der Fahrer mit dem Fahrzeug rollen will. Die Kupplung wird geöffnet (Sicherheitssignal = 1).

In dem Zustand Nr. 5 ist der Motor ebenfalls aus, das Fahrzeug rollt, der Fahrer hat die Bremse jedoch betätigt. Auch in diesem Fall wird die Kupplung geöffnet, um ein sicheres Bremsen zu ermöglichen.

In dem Zustand Nr. 6 ist der Motor aus, das Fahrzeug rollt und der Fahrer betätigt das Gaspedal. In diesem Fall wird die Kupplung geschlossen, denn aus diesen Signalen wird abgeleitet, daß der Fahrer möglicherweise den Motor durch Anrollen (bzw. Anschieben) wieder in Gang setzen möchte.

In dem Zustand Nr. 7 ist der Motor ebenfalls aus, und das Fahrzeug rollt. Ferner sind das Gaspedal und die Bremse betätigt. In diesem Fall wird aus Sicherheitsgründen die Kupplung geöffnet, um ein sicheres Bremsen zu ermöglichen. Die Gaspedalbetätigung wird in diesem Fall untergeordnet bewertet.

In den Zuständen Nr. 8 bis Nr. 15 ist die Motordrehzahl größer als ein Schwellenwert, der Motor läuft also.

In den Zuständen Nr. 8 bis 12 steht dabei das Fahrzeug. Falls das Gaspedal nicht betätigt wird (Zustände Nr. 8 und Nr. 9), wird die Kupplung geöffnet, um ein unerwünschtes Anfahren zu verhindern. Falls das Gaspedal betätigt wird und die Bremse nicht betätigt wird (Nr. 10), ist der Fahrerwunsch offensichtlich "Losfahren". Dieser Fahrerwunsch wird erfüllt, indem die Kupplung geschlossen wird. Es versteht sich, daß dies bei der ersten, hier beschriebenen Ausführungsform relativ ruckartig erfolgt, so daß ein ruckartiger Anfahrvorgang erzielt wird, es sei denn, für diesen Fall ist eine entsprechende Anfahrkennlinie in der Überwachungseinrichtung 44 hinterlegt.

Für den Fall des Zustandes Nr. 11 hat wiederum das Bremssignal Vorrang, die Kupplung wird geöffnet, um ein unerwünschtes Anfahren zu verhindern.

In den Zuständen Nr. 12 bis 15 läuft der Motor und das Fahrzeug fährt. Falls in diesem Zustand weder das Gaspedal niedergedrückt noch die Bremse betätigt wird (Zustand Nr. 12), ist die Stellung der Kupplung im Grunde egal. Im vorliegenden Fall wird die Kupplung geöffnet, um ein sicheres Bremsen zu realisieren.

Sie könnte jedoch auch geschlossen werden, um dem Fahrer Antriebsleistung zur Verfügung zu stellen.

In den Zuständen Nr. 13 und 15 wird die Bremse betätigt. Folglich wird die Kupplung geöffnet, um ein sicheres Bremsen zu ermöglichen.

In dem Zustand Nr. 14 wird das Gaspedal betätigt, der Fahrer will folglich weiterfahren oder sogar beschleunigen, die Kupplung wird folglich geschlossen (Sicherheitssignal = 0).

Aus dem obigen ergibt sich, daß das Sicherheitssignal, obgleich es nur zweiwertig ist, eine Vielzahl unterschiedlicher Fahrzeugzustandsvariablen berücksichtigt und daraus die optimale Kupplungsstellung für den jeweiligen Zustand ableitet.

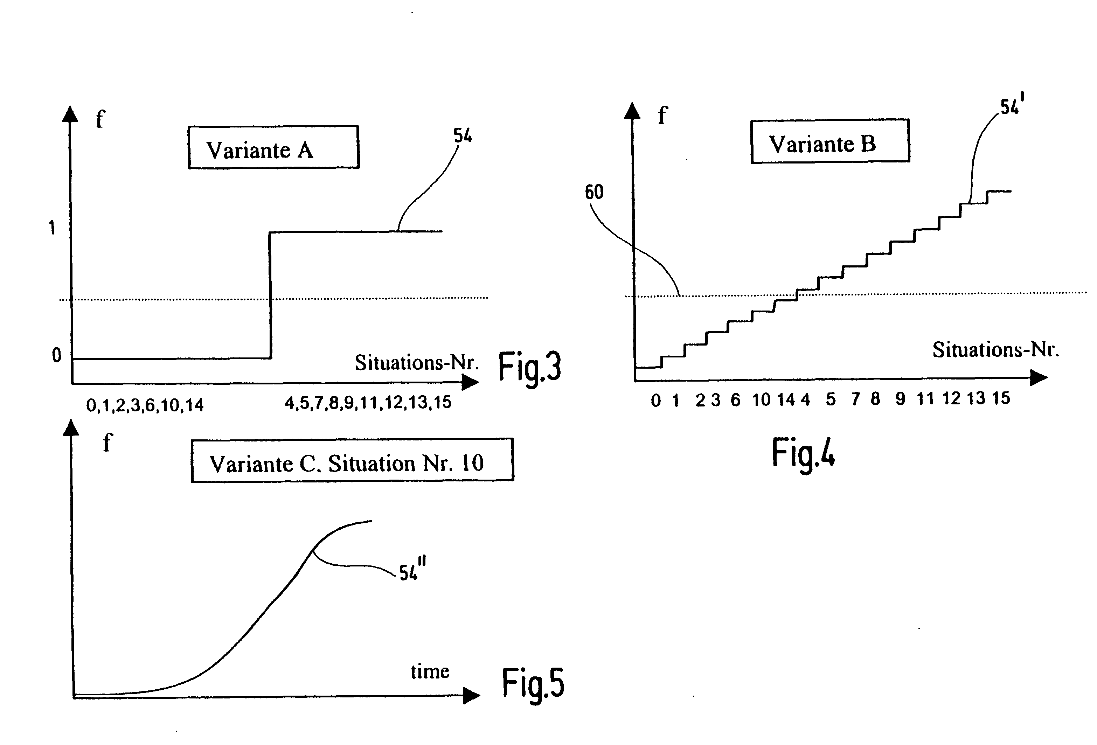

Die beschriebene Erzeugung des Sicherheitssignals ist in Fig. 3 schematisch als Darstellung einer Frequenz über der jeweiligen Situations- bzw. Zustandsnummer dargestellt.

Es ist zu erkennen, daß das Sicherheitssignal 54 für die Zustände 0, 1, 2, 3, 6, 10 und 14 jeweils den Wert 0 annimmt, so daß die Kupplung geschlossen wird. Für die anderen Zustände nimmt das Sicherheitssignal den Wert 1 an, so daß die Kupplung geöffnet wird.

Die Werte von "1" und "0" für das Sicherheitssignal 54 sind dabei als logische Werte zu betrachten.

Vorzugsweise ist das über die Verbindungsleitung 36 übermittelte Sicherheitssignal 54 ein Frequenzsignal, das in den Fällen der Zustände Nr. 0, 1, 2, 3, 6, 10 und 14 eine bestimmte Frequenz besitzt, und in den anderen Zuständen eine andere Frequenz aufweist. Die Überwachungseinrichtung 44 erkennt die Frequenz des Sicherheitssignals 54 und wertet diese logisch aus.

In Fig. 4 ist eine alternative Ausführungsform gezeigt, bei der das Sicherheitssignal 54' mehrwertig ist.

Bei dieser Ausführungsform wird jedem einzelnen Zustand eine bestimmte Frequenz des Sicherheitssignals 54' zugeordnet. Die Überwachungseinrichtung 44 beurteilt anhand eines Schwellenwertes 60, ob einer der Zustände 0, 1, 2, 3, 6, 10, 14 vorliegt (Frequenz unterhalb des Schwellenwertes 60), um die Trennkupplung zu schließen, oder einer der anderen Zustände.

In Fig. 2 ist in der rechten der beiden Spalten "Sicherer Kupplungszustand" eine alternative Ausführungsform zur Erzeugung eines Sicherheitssignals gezeigt.

Bei dieser Ausführungsform wird die Kupplung in den Zuständen Nr. 0 bis 9 und 11 bis 15 identisch angesteuert wie bei der ersten Ausführungsform. Lediglich im Zustand Nr. 10, wenn nämlich der Motor läuft und das Fahrzeug steht, der Fahrer jedoch das Gaspedal betätigt, wird von der Motorsteuereinheit 12 statt eines Signals "Kupplung schließen" ein Sicherheitssignal 54" erzeugt, wie es beispielsweise in Fig. 5 dargestellt ist.

Das heißt, das Sicherheitssignal 54" ist im Falle des Zustandes Nr. 10 ein über der Zeit variables Signal, das einen Anfahrvorgang vorgibt. Folglich kann in diesem Zustand das Sicherheitssignal 54" unmittelbar von der Überwachungseinrichtung 44 dazu benutzt werden, einen "sanften" Anfahrvorgang durchzuführen. Denn die Überwachungseinrichtung 44 muß lediglich ein dem Sicherheitssignal 54" proportionales Signal an den Kupplungsventiltreiber 42 weiterleiten. Demgemäß ist es nicht notwendig, in der Überwachungseinrichtung 44 eine aufwendige "Intelligenz" bereitzustellen. Es reichen einige wenige Logikgatter.

Obgleich das Sicherheitssignal 54 vorzugsweise ein Frequenzsignal ist, kann es sich auch um ein Spannungs-, ein Strom-, ein PWM- oder ein ähnliches Signal handeln.

## Patentansprüche

1. Steuervorrichtung (10) für einen automatisierten Antriebsstrang eines Kraftfahrzeuges, wobei der Antriebsstrang einen Motor, insbesondere einen Verbrennungsmotor, ein Getriebe, insbesondere ein Stirnradgetriebe, und eine zwischen Motor und Getriebe angeordnete Trennkupplung aufweist, wobei die Steuervorrichtung (10) eine Hauptsteuereinheit (12) und eine mit der Hauptsteuereinheit (12) verbundene Kupplungssteuereinheit (14) aufweist, die einen Aktuator (42) für die Trennkupplung ansteuert, wobei die Hauptsteuereinheit (12) ein Sicherheitssignal (54) an die Kupplungssteuereinheit (14) übersendet, gemäß dem die Kupplungssteuereinheit (14) die Trennkupplung ansteuert, wenn ein definierter Fehlerfall auftritt,
**dadurch gekennzeichnet, daß**
die Hauptsteuereinheit (12) das Sicherheitssignal (54) auf der Grundlage einer Mehrzahl von Fahrzeugzustandsvariablen (17, 19, 21, 23) erzeugt.

2. Steuervorrichtung nach Anspruch 1, **dadurch gekennzeichnet, daß** das Sicherheitssignal (54) ein zweiwertiges Signal ist.

3. Steuervorrichtung nach Anspruch 1, **dadurch gekennzeichnet, daß** das Sicherheitssignal (54') einen von N unterschiedlichen Werten annehmen kann, wobei N > 2.

4. Steuervorrichtung nach Anspruch 2 oder 3, **dadurch gekennzeichnet, daß** die Kupplungssteuereinheit (14) die Trennkupplung in Abhängigkeit von dem Sicherheitssignal (54; 54') entweder öffnet oder schließt.

5. Steuervorrichtung nach Anspruch 3, **dadurch gekennzeichnet, daß** die Kupplungssteuereinheit (14) die Trennkupplung in Abhängigkeit von dem Sicherheitssignal (54") öffnet, schließt oder in einen Schleifzustand bringt.

6. Steuervorrichtung nach Anspruch 5, **dadurch gekennzeichnet, daß** die Kupplungssteuereinheit (14) ein Kupplungsansteuersignal (43) proportional zu dem Wert des Sicherheitssignals (54") erzeugt.

7. Steuervorrichtung nach einem der Ansprüche 1 - 6, **dadurch gekennzeichnet, daß** die Mehrzahl von Fahrzeugzustandsvariablen die Motordrehzahl (17) beinhaltet.

8. Steuervorrichtung nach einem der Ansprüche 1 - 7, **dadurch gekennzeichnet, daß** die Mehrzahl von Fahrzeugzustandsvariablen die Fahrzeuggeschwindigkeit (19) beinhaltet.

9. Steuervorrichtung nach einem der Ansprüche 1 - 8, **dadurch gekennzeichnet, daß** die Mehrzahl von Fahrzeugzustandsvariablen die Gaspedalstellung (21) beinhaltet.

10. Steuervorrichtung nach einem der Ansprüche 1 - 9, **dadurch gekennzeichnet, daß** die Mehrzahl von Fahrzeugzustandsvariablen die Bremspedalstellung (23) beinhaltet.

11. Steuervorrichtung nach einem der Ansprüche 1 - 10, **dadurch gekennzeichnet, daß** die Verbindung (30) zwischen der Hauptsteuereinheit (12) und der Kupplungssteuereinheit (14) durch einen Bus (30), insbesondere einen CAN-Bus (30) gebildet ist.

12. Steuervorrichtung nach Anspruch 11, **dadurch gekennzeichnet, daß** das Sicherheitssignal über den Bus übertragen wird.

13. Steuervorrichtung nach Anspruch 11, **dadurch gekennzeichnet, daß** das Sicherheitssignal (54) von der Hauptsteuereinheit (12) zu der Kupplungssteuereinheit (14) über eine separate Leitung (36) übertragen wird.

14. Steuervorrichtung nach einem der Ansprüche 1 - 13, **dadurch gekennzeichnet, daß** das Sicherheitssignal (54) ein Frequenzsignal ist, dessen Frequenz (P) von der Mehrzahl von Fahrzeugzustandsvariablen (17, 19, 21, 23) abhängt.

15. Steuereinrichtung nach einem der Ansprüche 1 - 14, **dadurch gekennzeichnet, daß** die Kupplungssteuereinheit (14) eine Prozessoreinrichtung (40) und eine Überwachungseinrichtung (44) aufweist, wobei die Überwachungseinrichtung (44) das Sicherheitssignal (54) unmittelbar empfängt und dazu ausgelegt ist, den Aktuator unmittelbar anzusteuern.

16. Verfahren zum Steuern eines automatisierten Antriebsstranges eines Kraftfahrzeuges, wobei der Antriebsstrang einen Motor, insbesondere einen Verbrennungsmotor, ein Getriebe, insbesondere ein Stirnradgetriebe, und eine zwischen Motor und Getriebe angeordnete Trennkupplung aufweist, wobei eine Steuervorrichtung (10) eine Hauptsteuereinheit (12) und mit der Hauptsteuereinheit (12) verbundene Kupplungssteuereinheit (14) aufweist, die einen Aktuator (42) für die Trennkupplung ansteuert, wobei die Hauptsteuereinheit (12) ein Sicherheitssignal (54) an die Kupplungssteuereinheit (14) übersendet, gemäß dem die Kupplungssteuereinheit (14) die Trennkupplung ansteuert, wenn ein definierter Fehlerfall aufgetreten ist,
**dadurch gekennzeichnet, daß**
die Hauptsteuereinheit (12) das Sicherheitssignal (54) auf der Grundlage einer Mehrzahl von Fahrzeugzustandsvariablen (17, 19, 21, 23) erzeugt.

## Claims

1. Control apparatus (10) for an automated drive train in a motor vehicle, with the drive train having an engine, in particular an internal combustion engine, a transmission, in particular a spur gear transmission, and a clutch, which is arranged between the engine and the transmission, with the control apparatus (10) having a main control unit (12) and a clutch control unit (14), which is connected to the main control unit (12) and drives an actuator (42) for the clutch, with the main control unit (12) transmitting a safety signal (54) to the clutch control unit (14), on the basis of which the clutch control unit (14) drives the clutch when a defined fault occurs,
**characterized in that**
the main control unit (12) produces the safety signal (54) on the basis of a plurality of vehicle state variables (17, 19, 21, 23).

2. Control apparatus according to Claim 1, **characterized in that** the safety signal (54) is a two-value signal.

3. Control apparatus according to Claim 1, **characterized in that** the safety signal (54') can assume one of N different values, where N > 2.

4. Control apparatus according to Claim 2 or 3, **characterized in that** the clutch control unit (14) either opens or closes the clutch as a function of the safety signal (54; 54').

5. Control apparatus according to Claim 3, **characterized in that** the clutch control unit (14) opens or closes the clutch, or changes it to a slipping state, as a function of the safety signal (54").

6. Control apparatus according to Claim 5, **characterized in that** the clutch control unit (14) produces a clutch drive signal (43) in proportion to the value of the safety signal (54").

7. Control apparatus according to one of Claims 1-6, **characterized in that** the plurality of vehicle state variables includes the engine rotation speed (17).

8. Control apparatus according to one of Claims 1-7, **characterized in that** the plurality of vehicle state variables includes the vehicle speed (19).

9. Control apparatus according to one of Claims 1-8, **characterized in that** the plurality of vehicle state variables includes the accelerator pedal position (21).

10. Control apparatus according to one of Claims 1-9, **characterized in that** the plurality of vehicle state variables includes the brake pedal position (23).

11. Control apparatus according to one of Claims 1-10, **characterized in that** the connection (30) between the main control unit (12) and the clutch control unit (14) is formed by a bus (30), in a particular a CAN bus (30).

12. Control apparatus according to Claim 11, **characterized in that** the safety signal is transmitted via the bus.

13. Control apparatus according to Claim 11, **characterized in that** the safety signal (54) is transmitted from the main control unit (12) to the clutch control unit (14) via a separate line (36).

14. Control apparatus according to one of Claims 1-13, **characterized in that** the safety signal (54) is a frequency signal, whose frequency (P) depends on the plurality of vehicle state variables (17, 19, 21, 23).

15. Control device according to one of Claims 1-14, **characterized in that** the clutch control unit (14) has a processor device (40) and a monitoring device (44), with the monitoring device (44) receiving the safety signal (54) directly and being designed to drive the actuator directly.

16. Method for controlling an automated drive train in a motor vehicle, with the drive train having an engine, in particular an internal combustion engine, a transmission, in particular a spur gear transmission, and a clutch, which is arranged between the engine and the transmission, with a control apparatus (10) having a main control unit (12) and a clutch control unit (14), which is connected to the main control unit (12) and drives an actuator (42) for the clutch, with the main control unit (12) transmitting a safety signal (54) to the clutch control unit (14), on the basis of which the clutch control unit (14) drives the clutch when a defined fault has occurred,
**characterized in that**
the main control unit (12) produces the safety signal (54) on the basis of a plurality of vehicle state variables (17, 19, 21, 23).

## Revendications

1. Dispositif de commande (10) pour une ligne d'entraînement automatisée d'un véhicule automobile, la ligne d'entraînement comportant un moteur, en particulier un moteur à combustion interne, une boîte de vitesses, en particulier un réducteur à engrenages droits, et un embrayage de séparation monté entre le moteur et la boîte de vitesses, le dispositif de commande (10) comportant une unité de commande principale (12) et une unité de commande d'embrayage (14), qui est reliée à l'unité de commande principale (12) et qui active un actionneur (42) pour l'embrayage de séparation, l'unité de commande principale (12) transmettant un signal de sécurité (54) vers l'unité de commande d'embrayage (14), selon lequel l'unité de commande d'embrayage (14) active l'embrayage de séparation à l'apparition d'un dysfonctionnement défini,
**caractérisé en ce que** l'unité de commande principale (12) génère le signal de sécurité (54) sur la base d'une pluralité de variables d'état du véhicule (17, 19, 21, 23).

2. Dispositif de commande selon la revendication 1, **caractérisé en ce que** le signal de sécurité (54) est un signal bivalent.

3. Dispositif de commande selon la revendication 1, **caractérisé en ce que** le signal de sécurité (54') peut accepter une valeur parmi N valeurs différentes, N étant supérieur à 2.

4. Dispositif de commande selon la revendication 2 ou 3, **caractérisé en ce que** l'unité de commande d'embrayage (14) ouvre ou ferme l'embrayage de séparation en fonction du signal de sécurité (54 ; 54').

5. Dispositif de commande selon la revendication 3, **caractérisé en ce que** l'unité de commande d'embrayage (14), en fonction du signal de sécurité (54"), ouvre, ferme ou amène en position de friction l'embrayage de séparation.

6. Dispositif de commande selon la revendication 5, **caractérisé en ce que** l'unité de commande d'embrayage (14) génère un signal de commande d'embrayage (43) proportionnel à la valeur du signal de sécurité (54").

7. Dispositif de commande selon l'une quelconque des revendications 1 à 6, **caractérisé en ce que** la pluralité de variables d'état du véhicule contient la vitesse de rotation du moteur (17).

8. Dispositif de commande selon l'une quelconque des revendications 1 à 7, **caractérisé en ce que** la pluralité de variables d'état du véhicule contient la vitesse du véhicule (19).

9. Dispositif de commande selon l'une quelconque des revendications 1 à 8, **caractérisé en ce que** la pluralité de variables d'état du véhicule contient la position de la pédale d'accélérateur (21).

10. Dispositif de commande selon l'une quelconque des revendications 1 à 9, **caractérisé en ce que** la pluralité de variables d'état du véhicule contient la position de la pédale de frein (23).

11. Dispositif de commande selon l'une quelconque des revendications 1 à 10, **caractérisé en ce que** la liaison (30) entre l'unité de commande principale (12) et l'unité de commande d'embrayage (14) est formée par un bus (30), en particulier un bus CAN (30).

12. Dispositif de commande selon la revendication 11, **caractérisé en ce que** le signal de sécurité est transmis via le bus.

13. Dispositif de commande selon la revendication 11, **caractérisé en ce que** le signal de sécurité (54) est transmis de l'unité de commande principale (12) vers l'unité de commande d'embrayage (14) via une ligne séparée (36).

14. Dispositif de commande selon l'une quelconque des revendications 1 à 13, **caractérisé en ce que** le signal de sécurité (54) est un signal de fréquence, dont la fréquence (P) dépend de la pluralité des variables d'état du véhicule (17, 19, 21, 23).

15. Dispositif de commande selon l'une quelconque des revendications 1 à 14, **caractérisé en ce que** l'unité de commande d'embrayage (14) comporte un processeur (40) et un contrôleur (44), le contrôleur (44) recevant directement le signal de sécurité (54) et étant conçu pour activer directement l'actionneur.

16. Procédé de commande d'une ligne d'entraînement automatisée d'un véhicule automobile, la ligne d'entraînement comportant un moteur, en particulier un moteur à combustion interne, une boîte de vitesses, en particulier un réducteur à engrenages droits, et un embrayage de séparation monté entre le moteur et la boîte de vitesses, un dispositif de commande (10) comportant une unité de commande principale (12) et une unité de commande d'embrayage (14), qui est reliée à l'unité de commande principale (12) et qui active un actionneur (42) pour l'embrayage de séparation, l'unité de commande principale (12) transmettant un signal de sécurité (54) vers l'unité de commande d'embrayage (14), selon lequel l'unité de commande d'embrayage (14) active l'embrayage de séparation à l'apparition d'un dysfonctionnement défini,
**caractérisé en ce que** l'unité de commande principale (12) génère le signal de sécurité (54) sur la base d'une pluralité de variables d'état du véhicule (17, 19, 21, 23).
